(19) Europäisches Patentamt
European Patent Office
Office européen des brevets

(11) **EP 4 096 159 B1**

(12) **FASCICULE DE BREVET EUROPEEN**

(45) Date de publication et mention de la délivrance du brevet:
**23.08.2023 Bulletin 2023/34**

(21) Numéro de dépôt: **22175552.3**

(22) Date de dépôt: **25.05.2022**

(51) Classification Internationale des Brevets (IPC):
***H04L 9/40*** *(2022.01)*

(52) Classification Coopérative des Brevets (CPC):
**H04L 63/062; H04L 63/18**

(54) **MÉTHODE DE PROVISIONNEMENT DE CLÉS DANS UN RÉSEAU D'OBJETS CONNECTÉS**

METHODE ZUR BEREITSTELLUNG VON SCHLÜSSELN IN EINEM NETZWERK VERBUNDENER OBJEKTE

METHOD FOR KEY PROVISIONING IN A NETWORK OF CONNECTED OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2021 FR 2105497**

(43) Date de publication de la demande:
**30.11.2022 Bulletin 2022/48**

(73) Titulaire: **Commissariat à l'énergie atomique et aux énergies alternatives 75015 Paris (FR)**

(72) Inventeur: **HENNEBERT, Christine 38054 GRENOBLE CEDEX 09 (FR)**

(74) Mandataire: **Brevalex 56, Boulevard de l'Embouchure B.P. 27519 31075 Toulouse Cedex 2 (FR)**

(56) Documents cités:
**US-A1- 2017 310 485**

• **Gengyun Wang ET AL: "Comparison and Evaluation of Industrial Wireless Sensor Network Standards", , 24 décembre 1011 (1011-12-24), pages 1-97, XP055138366, Gothenburg, Sweden Extrait de l'Internet: URL:http://publications.lib.chalmers.se/records/fulltext/146427.pdf [extrait le 2014-09-04]**

**Description**

**DOMAINE TECHNIQUE**

La présente invention concerne le domaine général des réseaux de capteurs sans fil ou WSN (*Wireless Sensor Network*). Elle trouve notamment application dans le domaine de l'habitat connecté et plus généralement de la domotique.

**ÉTAT DE LA TECHNIQUE ANTÉRIEURE**

L'habitat connecté (Smart Home) fait appel à des réseaux d'objets tels que des capteurs et des actionneurs, connecté à Internet. Les capteurs peuvent mesurer des grandeurs physiques telles que la pression, la température, le contact, la présence de gaz, la lumière dans le visible ou l'infra-rouge, etc. et les actionneurs peuvent agir sur l'environnement en commandant un interrupteur, la fermeture ou l'ouverture d'un portail, de volets roulants, en modifiant une température de consigne, en déverrouillant une porte, etc.

Le réseau d'objets connectés comprend généralement en outre une centrale de programmation servant à transmettre des commandes aux dits objets et permettant à l'installateur ou à l'utilisateur de contrôler le réseau. Selon le protocole de communication utilisé, la topologie du réseau peut être maillée ou en étoile.

Un tel réseau d'objets connectés se présente sous la forme d'un réseau local connecté à Internet via une passerelle. Les protocoles de communication au sein de ce réseau sont généralement propriétaires mais peuvent alternativement utiliser des standards tels que ZigBee ou 6LowPAN s'appuyant les couches basses (physique et liaison) à faible consommation de IEEE 802.15.4.

La fonction de la passerelle est de relayer les données et/ou les commandes entre un serveur du Cloud et les capteurs/ actionneurs du réseau. Si la communication entre la passerelle et le serveur est sécurisée, la transmission de données au sein du réseau d'objets connectés ne l'est pas nécessairement.

Afin de protéger les objets connectés contre des attaques, visant par exemple dans le contexte de la domotique à prendre le contrôle d'un actionneur, il est nécessaire de chiffrer les communications au sein du réseau d'objets connectés.

A cette fin, on peut utiliser des techniques d'appairage sécurisé entre dispositifs basées sur un protocole de Diffie-Hellman pour partager une clé symétrique. Toutefois, cela suppose que les objets connectés disposent de capacités suffisantes pour effectuer des calculs de cryptographie asymétrique sur courbes elliptiques, ce qui n'est généralement pas le cas.

D'autres techniques peuvent permettre de partager une clé secrète commune comme celle du calcul multipartite sécurisé ou MPC (*Multi Party Computing*) permettant à une pluralité de pairs de s'accorder sur un résultat commun. Toutefois cette dernière ne peut être mise en oeuvre que pour un canal de communication unique.

Gengyun Wang ET AL dans "Comparison and Evaluation of Industrial Wireless Sensor Network Standards", 24 décembre 1011 (1011-12-24), pages 1-97, présente une comparaison entre les normes WirelessHART et ISA100.1a pour le provisionnement de clés dans un réseau sans fil, comprenant une centrale de programmation et une pluralité d'objets connectés.

US 2017/310485 A1 propose un procédé de sécurisation d'un réseau sans fil comprenant une centrale de programmation et une pluralité d'objets connectés, dans lequel les clés sont distribuées dans un signal chiffré envoyé dans un canal auxiliaire sans fil ayant une zone de couverture prédéterminée.

Un objectif de la présente invention est de proposer une méthode de provisionnement de clés au sein d'un réseau d'objets connectés permettant à ceux-ci de communiquer de manière sécurisée. Un objectif subsidiaire de la présente invention est de proposer une méthode de provisionnement de clés qui soit simple et robuste, notamment en cas d'ajout ou de remplacement d'un objet connecté, et cas de changement de propriétaire du réseau.

**EXPOSÉ DE L'INVENTION**

La présente invention est définie par une méthode de provisionnement de clés dans un réseau sans fil dont les noeuds comprennent une centrale de programmation et une pluralité d'objets connectés, ladite méthode de provisionnement mettant en oeuvre un terminal comportant un élément matériel sécurisé dans lequel sont stockées des clés secrètes, les différents noeuds du réseau pouvant communiquer sur un canal principal et sur un canal auxiliaire, distinct du canal principal, ledit terminal ne pouvant communiquer avec les différents noeuds du réseau que sur le canal auxiliaire, ladite méthode comprenant :

- une première phase pendant laquelle le terminal et chaque noeud du réseau s'authentifient et s'identifient mutuellement via le canal auxiliaire au moyen d'une clé publique du fabricant ;
- une seconde phase pendant laquelle le terminal distribue de manière sécurisée un ensemble de clés secrètes aux différents noeuds du réseau, ledit ensemble de clés secrètes comprenant une première clé secrète (*AuthN* ), destinée à authentifier les noeuds appartenant au réseau et une seconde clé secrète (*ConfN*) destinée à chiffrer des échanges sur le canal principal ;

- une troisième phase pendant laquelle la centrale de programmation découvre le réseau au moyen d'un message de découverte diffusé aux objets connectés, le message de découverte étant authentifié au moyen de la première clé secrète et, en cas de succès d'authentification dudit message par un objet connecté, envoi d'un message d'acquittement à la centrale de programmation, chiffré par la seconde clé secrète.

Selon un premier mode de réalisation de l'invention, chaque noeud est équipé d'une première antenne adaptée à émettre et recevoir sur le canal principal et d'une seconde antenne adaptée à émettre et recevoir sur le canal auxiliaire, la propagation sur le canal auxiliaire étant de portée sensiblement plus courte que la propagation sur le canal principal.

Avantageusement, le terminal, resp. chaque noeud du réseau, dispose d'un identifiant unique du fabricant et embarque un code binaire, ledit code binaire étant haché au moyen d'une fonction de hachage, le résultat du hachage étant concaténé avec ledit identifiant unique, l'ensemble étant signé par une clé privée correspondant à la clé publique du fabricant et le résultat signé étant stocké dans le terminal, resp. le noeud sous forme d'identifiant signé, et, dans la première phase, le terminal transmet son identifiant signé à chaque noeud du réseau, le noeud authentifiant le terminal à partir l'identifiant signé du terminal et de ladite clé publique du fabricant et, réciproquement, chaque noeud transmet son identifiant signé au terminal, le terminal authentifiant chaque noeud à partir de l'identifiant signé du noeud et de ladite clé publique du fabricant.

En cas de succès d'authentification du terminal par un noeud, l'identifiant du terminal peut être stocké dans une mémoire EEPROM de ce noeud.

Dans la seconde phase, le terminal transmet avantageusement, via le canal auxiliaire, ledit ensemble de clés secrètes à chaque noeud et, dans le cas où l'identifiant du terminal est stocké dans le noeud, ce dernier stocke ledit ensemble de clés secrètes dans la mémoire EEPROM du noeud et commute son émetteur/récepteur sur le canal principal.

Selon un second mode de réalisation, le canal auxiliaire entre le terminal et chaque noeud est chiffré au moyen d'une clé symétrique de liaison obtenue à partir d'une clé de session éphémère, de l'identifiant du terminal ainsi que de l'identifiant dudit noeud.

La clé de session éphémère peut alors être obtenue au moyen d'un échange de Diffie-Hellman entre le terminal et la centrale de programmation.

De préférence, dans la seconde phase le terminal transmet, dans une première étape, ledit ensemble de clés secrètes à la centrale de programmation, ledit ensemble de clés secrètes étant chiffré au moyen de la clé de session éphémère.

Dans la seconde phase, le terminal transmet avantageusement, dans une seconde étape, ledit ensemble de clés secrètes à chaque noeud, ledit ensemble de clés secrètes étant chiffré au moyen de la clé symétrique de liaison associée au terminal et à ce noeud, ladite clé symétrique de liaison étant obtenue comme un haché de la clé éphémère concaténée à l'identifiant unique du terminal et à l'identifiant unique du noeud.

Quel que soit le mode de réalisation, dans la troisième phase, lorsqu'un noeud authentifie avec succès un message de découverte émis par la centrale de programmation, il lui renvoie avantageusement un message d'acquittement signé par la seconde clé secrète, la centrale de programmation stockant alors l'identifiant dudit objet dans sa mémoire locale après l'avoir déchiffré avec la seconde clé secrète.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique un exemple de réseau d'objets connectés auquel peut s'appliquer la méthode de provisionnement de clés selon la présente invention ;
La Fig. 2 représente un dongle sécurisé permettant de provisionner des clés dans le réseau d'objets connectés de la Fig. 1 ;
La Fig. 3 représente de manière schématique l'architecture interne du dongle sécurisé de la Fig. 2 ;
La Fig. 4 représente une centrale de programmation permettant de programmer les objets connectés de la Fig. 1 ;
La Fig. 5 représente de manière schématique l'architecture interne de la centrale de programmation de la Fig. 4 ;
La Fig. 6 représente de manière schématique l'architecture interne d'un objet connecté dans le réseau de la Fig. 1 ;
La Fig. 7 représente de manière schématique une phase d'authentification et d'identification mutuelle entre le dongle sécurisé et un noeud du réseau ;
La Fig. 8 représente de manière schématique une étape de transmission de clés secrètes par le dongle sécurisé à la centrale de programmation, dans le cadre d'un premier mode de réalisation de l'invention ;

La Fig. 9 représente de manière schématique une étape de transmission de clés secrètes par le dongle sécurisé à un objet connecté, dans le cadre du premier mode de réalisation de l'invention ;

La Fig. 10 représente de manière schématique une étape de transmission de clés secrètes par le dongle sécurisé à la centrale de programmation, dans le cadre d'un second mode de réalisation de l'invention ;

La Fig. 11 représente de manière schématique une étape de transmission de clés secrètes par le dongle sécurisé à un objet connecté, dans le cadre du second mode de réalisation de l'invention ;

La Fig. 12 représente de manière schématique une phase de découverte du réseau d'objets connectés par la centrale de programmation.

## EXPOSÉ DÉTAILLÉ DE MODES DE RÉALISATION PARTICULIERS

On considérera dans la suite, à titre d'exemple et sans préjudice de généralisation, un réseau d'objets connectés dans un contexte domotique. Toutefois, l'homme du métier comprendra dans la description des modes de réalisation que la méthode de provisionnement de clés selon la présente invention est susceptible de s'appliquer à tout réseau d'objets connectés devant opérer de manière sécurisée, par exemple à un réseau d'objets connectés industriel (IIoT ou Industrial IoT).

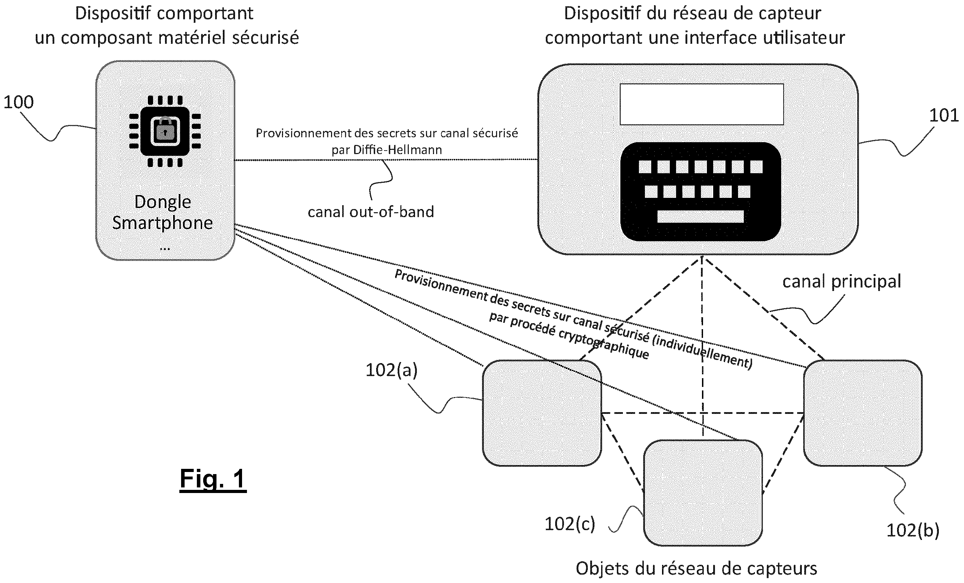

La Fig. 1 représente de manière schématique un exemple de réseau d'objets connectés dans le domaine de la domotique.

Un terminal de communication sécurisée, 100, extérieur au réseau, par exemple un dongle ou bien un smartphone disposant d'une application dédiée. Ce terminal comporte une zone matérielle sécurisée ou SE (Secure Element) dans laquelle sont stockées des clés secrètes. Il permet de provisionner les clés secrètes dans le réseau, autrement dit de distribuer ces clés aux différents noeuds du réseau, comme décrit plus loin. Dans la suite de la description nous supposerons, sans perte de généralité, que ce terminal est un dongle.

Le réseau comprend une centrale de programmation, 101, disposant d'une interface utilisateur pour paramétrer les objets connectés et contrôler le fonctionnement du réseau.

Les objets connectés eux-mêmes (102a, 102b, 102c) sont généralement des capteurs ou des actionneurs pouvant émettre des données à destination et/ou recevoir des données en provenance d'une passerelle IP (non représentée) reliée à Internet. La passerelle IP peut être intégrée dans la centrale de programmation.

Les différents noeuds du réseau (centrale de programmation, objets connectés) disposent d'un canal principal radio (main channel) au moyen duquel les différents noeuds du réseau peuvent transmettre des données utiles une fois que le réseau est configuré.

Les noeuds du réseau disposent en outre d'un canal auxiliaire (out-of-band channel), distinct du canal principal, permettant de distribuer des clés secrètes servant à l'authentification des noeuds et à la sécurisation des communications au sein du réseau.

Selon un premier mode de réalisation, le canal auxiliaire utilise une couche physique distincte, basée sur une propagation à courte portée (NFC, VLC, LiFi, canal ultrasonore, par exemple). Le logiciel embarqué dans les noeuds doit alors être capable de commuter d'une couche physique à l'autre et, le cas échéant d'une pile protocolaire à l'autre.

Selon un second mode de réalisation, le canal auxiliaire est obtenu en configurant la couche physique du canal principal de manière à réduire la portée de la propagation. Le logiciel embarqué dans les noeuds doit alors être capable de commuter rapidement la configuration de la couche physique du standard utilisé (typiquement IEEE 802.15.4).

Les différents noeuds du réseau sont décrits plus en détail ci-après.

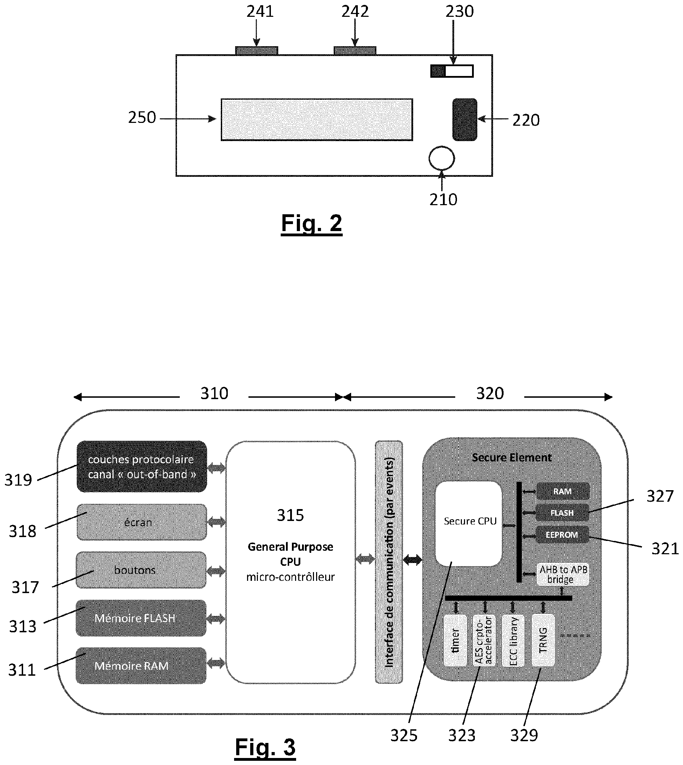

La Fig. 2 représente de manière schématique un exemple de dongle sécurisé pouvant être utilisé dans le réseau de la Fig. 1.

Ce dongle, alimenté par une batterie, 210, est équipé d'un émetteur/ récepteur, 220, uniquement capable d'émettre et de recevoir sur le canal auxiliaire (par exemple NFC ou ultrasonore), un bouton de mise sous tension, 230, et un ou deux boutons, 241, 242 permettant notamment de faire défiler des mots ou des commandes sur l'écran, 250.

Le dongle possède une pile protocolaire lui permettant d'établir une communication sur le canal auxiliaire avec chaque noeud du réseau.

La Fig. 3 représente de manière schématique l'architecture interne du dongle de la Fig. 2.

L'architecture du dongle est partitionnée en une zone non sécurisée, 310, et une zone sécurisée, 320.

La zone non sécurisée comprend un CPU, 315, un mémoire RAM, 311 et une mémoire flash, 313, dans laquelle est stocké le code contrôlant le dongle. Le processeur 315 gère les boutons, 317, l'écran, 318, ainsi que la pile protocolaire du canal auxiliaire, 319.

La zone sécurisée se présente quant à elle sous la forme d'un élément matériel sécurisé SE (secure element), encore dénommé composant matériel de sécurité, capable de stocker les clés secrètes dans une zone mémoire protégée (EEPROM), 321. Elle comprend en outre un processeur sécurisé, 325, capable d'évaluer des fonctions et des primitives cryptographiques, notamment de signer et de chiffrer des données au moyen de ces clés. Le cas échéant, l'élément sécurisé peut comprendre un accélérateur matériel sous la forme d'un coprocesseur spécialisé (cryptoprocesseur), 323.

Les fonctions cryptographiques sont enregistrées dans une mémoire flash, 327, de la zone sécurisée.

La zone sécurisée comprend enfin un générateur de nombres aléatoires, TRNG (True Random Number Generator), 329, utilisant une source d'entropie physique.

L'élément matériel sécurisé, 320, présente un niveau de sécurité élevé pour être robuste aux attaques physiques et logiques, de préférence un niveau de sécurité EAL5. Le générateur de nombres aléatoires satisfait de préférence aux exigences de la norme AIS31.

Avantageusement, l'accès à la zone sécurisée ne se fait que sur interruption. Par exemple, comme nous le verrons plus loin, la pression simultanée sur les boutons 317, déclenche une lecture par le CPU 315 des clés secrètes stockées dans la mémoire EEPROM, 321.

Lors de la première mise sous tension du dongle, le générateur de nombres aléatoires génère une graine (master seed) et une série de mots de passe (pass phrase) en est dérivée.

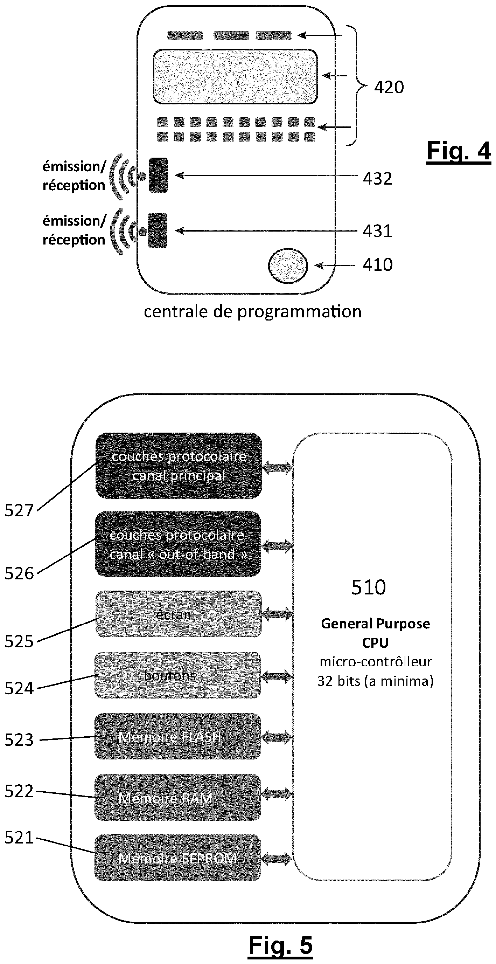

La Fig. 4 représente une centrale de programmation permettant de programmer les objets connectés de la Fig. 1.

La centrale de programmation est alimentée par une batterie voire une alimentation basse tension, 410, et est dotée d'une interface utilisateur (écran, touches de menu, clavier etc.), 420 permettant à l'utilisateur de configurer le mode de la centrale et d'envoyer des commandes aux différents objets connectés. L'écran permet de présenter le menu des fonctions et de retourner des informations à l'utilisateur.

Selon le premier mode de réalisation, la centrale de programmation est équipée de deux antennes distinctes. La première antenne, 431, est utilisée pour communiquer sur le canal principal en émission/ réception avec les objets connectés. La seconde antenne, 432, est utilisée pour recevoir sur le canal auxiliaire des messages du dongle sécurisé et, le cas échéant, lui retourner des accusés de réception et des messages d'identification.

La Fig. 5 représente de manière schématique l'architecture interne de la centrale de programmation de la Fig. 4.

La centrale de programmation comprend un microcontrôleur, 510, par exemple un microcontrôleur 32 bits, capable d'évaluer des fonctions de cryptographie asymétriques sur courbes elliptiques. La centrale de programmation dispose dans sa mémoire flash, 523, d'une librairie de primitives cryptographiques lui permettant de calculer des fonctions standard de cryptographie sur courbes elliptiques : génération d'une paire de clés public/privée éphémère, signature numérique et vérification ECDSA.

Le microcontrôleur gère les boutons, 524, l'écran, 525, ainsi que les couches des piles protocolaires du canal auxiliaire, 526, et du canal principal, 527.

A la différence du dongle, la centrale de programmation ne comprend pas d'élément matériel sécurisé. En effet, comme nous le verrons plus loin, les clés secrètes sont transférées à la centrale de programmation et stockées dans une mémoire permanente de type EEPROM, 521. Enfin, la centrale de programmation dispose d'une mémoire RAM, 522.

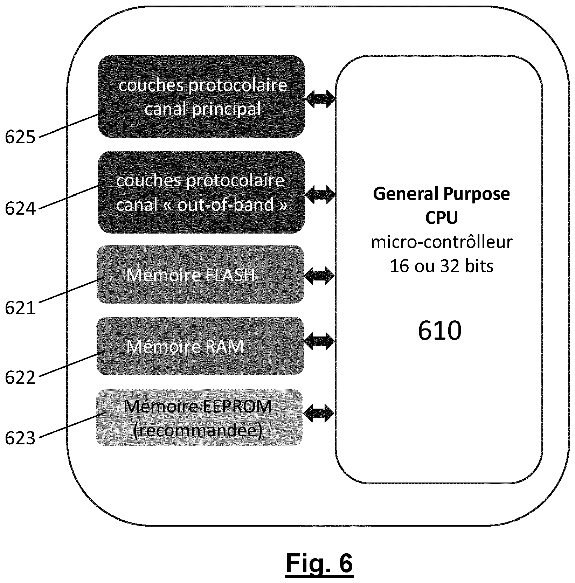

La Fig. 6 représente de manière schématique l'architecture interne d'un objet connecté dans le réseau de la Fig. 1.

Les objets connectés possèdent une architecture simple impliquant peu de ressources matérielles. Ils comportent un microcontrôleur (16 bits ou 32 bits), 610, une mémoire flash, 621, dans laquelle est stocké le code de fonctionnement, une mémoire RAM, 622, et, le cas échéant, une mémoire EEPROM, 623, peuvent être stockées de manière permanente des clés secrètes fournies par le dongle. Le code comprend des fonctions permettant de vérifier une signature numérique ECDSA à partir d'une clé publique contenue dans un certificat numérique, de manière à pouvoir authentifier le dongle sécurisé, comme décrit plus loin.

Le microcontrôleur gère les couches des piles protocolaires du canal auxiliaire, 624, et du canal principal, 625, comme dans la centrale de programmation.

Selon le premier mode de réalisation, les objets connectés sont équipés chacun de deux antennes distinctes, la première antenne étant utilisée pour communiquer en émission/réception sur le canal principal avec la centrale de programmation ainsi qu'avec la passerelle, la seconde antenne étant utilisée pour recevoir sur le canal auxiliaire des messages du dongle sécurisé et, le cas échéant, lui retourner des accusés de réception et des messages d'identification.

La méthode de provisionnement de clés dans le réseau comprend une première phase dans laquelle le dongle et les différents noeuds du réseau s'authentifient et s'identifient mutuellement et une deuxième phase dans laquelle le dongle distribue de manière sécurisée des clés secrètes aux différents noeuds du réseau. Ces deux phases sont suivies d'une troisième phase de découverte des noeuds et de formation du réseau par la centrale de programmation. Seule la deuxième phase dépend du mode de réalisation, les première et troisième phases étant commune aux deux modes de réalisation.

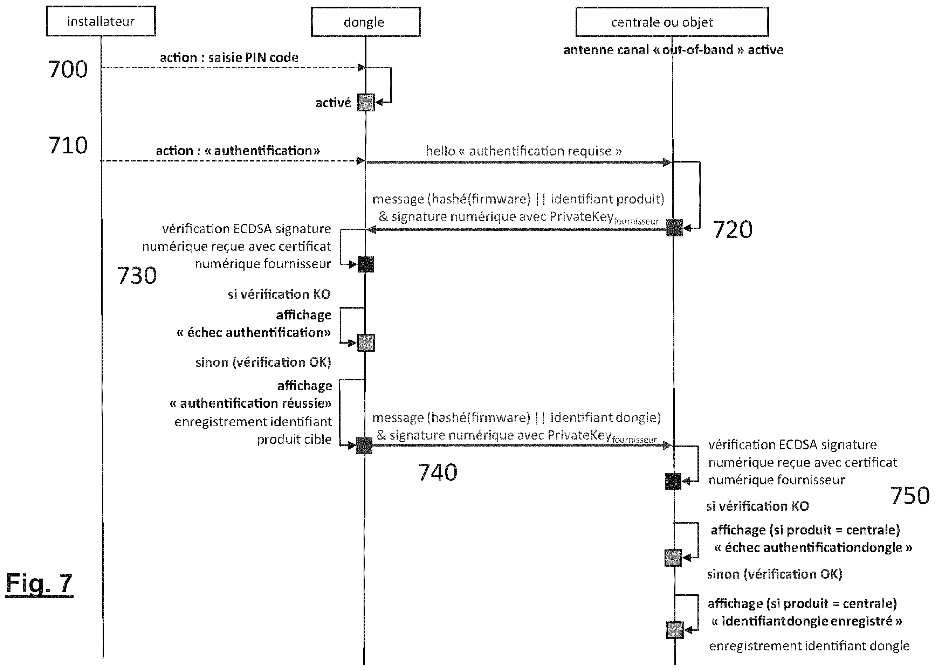

La Fig. 7 représente de manière schématique une phase d'authentification et d'identification mutuelle entre le dongle sécurisé et les différents noeuds du réseau.

Il est important de noter préalablement que chaque noeud du réseau (centrale de programmation, objet connecté, passerelle) possède un identifiant unique qui lui est attribué par le fabricant du matériel. Par ailleurs, le code binaire embarqué (firmware) dans chacun des noeuds est haché au moyen d'une fonction de hachage (par exemple SHA-1, SHA256, Keccak). Le résultat du hachage est concaténé avec l'identifiant du noeud et l'ensemble est ensuite signé avec la clé privée du fabricant, par exemple au moyen de l'algorithme ECDSA. L'ensemble concaténé et la signature ainsi obtenue, dite signature numérique du noeud, sont stockés avec le code binaire embarqué dans la mémoire flash du noeud (autrement dit tous les calculs sont effectués et stockés lors de la fabrication du noeud). Chaque noeud embarque également le certificat numérique du fabricant et dispose donc de la clé publique associée à la clé privée qui a servi pour la signature.

Dans une étape préalable, 700, l'installateur accède aux commandes du dongle en saisissant un mot de passe ou un code confidentiel (PIN code).

Dans une première étape 710, le dongle envoie, via le canal auxiliaire, une requête d'authentification au noeud (centrale de programmation, objet connecté).

Celui-ci lui retourne en 720, sur le canal auxiliaire, un message d'authentification comprenant le haché de son firmware, concaténé avec son identifiant, ainsi que la signature numérique du noeud, c'est-à-dire la signature du haché du firmware concaténé avec l'identifiant du noeud.

Le dongle vérifie ensuite en 730, au moyen de l'algorithme de vérification ECDSA, que la signature numérique est bien correcte à l'aide de la clé publique du fabricant. La clé publique nécessaire pour effectuer cette vérification est contenue dans le certificat numérique du fabricant, embarqué dans le dongle.

Si la vérification de la signature numérique est concluante, le noeud est authentifié, son identifiant est stocké en tant que tel dans la mémoire EEPROM de l'élément matériel sécurisé et la réussite de l'authentification est signalée, par exemple au moyen d'un message affiché sur l'écran du dongle ou un signal lumineux/sonore. Il convient de noter que cette vérification n'a lieu qu'une seule fois, lorsque le réseau est déployé, ou bien lorsqu'un nouveau noeud est ajouté. Avant de procéder à cette vérification, le dongle vérifie que l'identifiant ne figure pas déjà dans sa mémoire EEPROM. Dans l'affirmative, la vérification de la signature numérique, coûteuse en calcul est omise.

Si la vérification de la signature numérique échoue, un message d'échec d'authentification est affiché sur l'écran du dongle.

Si la vérification de signature a été concluante ou que le noeud était déjà authentifié, le dongle transmet à son tour, en 740, un message d'authentification au noeud. Ce message comprend un haché du code binaire (firmware) embarqué dans le dongle, concaténé avec son identifiant, l'ensemble concaténé étant ensuite signé avec la clé privée du fabricant. La signature obtenue est stockée avec le code binaire embarqué dans la mémoire flash du dongle (autrement dit ces calculs sont effectués lors de la fabrication).

Le noeud vérifie, à son tour, en 750, au moyen de l'algorithme de vérification ECDSA, que la signature numérique est bien correcte à l'aide de la clé publique du fabricant. La clé publique nécessaire pour effectuer cette vérification est contenue dans le certificat numérique du fabricant, embarqué dans le noeud.

Le succès ou l'échec de cette vérification est signalé à l'installateur, par un signal sonore et/ou lumineux.

En cas de succès de la vérification, l'identifiant du dongle est stocké dans la mémoire EEPROM du noeud.

Il convient de noter que l'échec de l'authentification du noeud ou du dongle peut provenir du fait que le certificat de clé publique stocké dans l'un ou l'autre est obsolète. Pour cette raison, le dongle effectue de préférence la vérification de signature en premier lieu. Il pourra ainsi essayer plusieurs versions de certificat (et donc plusieurs clés publiques), pour vérifier la signature numérique du noeud. Si le dongle dispose d'une pluralité de signatures numériques associées à différentes versions de certificat, autrement dit si sa mémoire contient les signatures (de l'ensemble concaténé formé par le haché de son firmware et son identifiant) au moyen des clés privées correspondant aux clés publiques versionnées, il pourra transmettre au noeud (à l'étape 740) celle associée à la version du certificat qui lui a permis d'authentifier le noeud (à l'étape 730).

Une fois la phase d'authentification et d'identification mutuelle effectuée avec succès, le dongle sécurisé transmet de manière sécurisée un ensemble de clés secrètes à la centrale de programmation.

Cet ensemble de clés secrètes comprend au moyen une première clé secrète *ConfN* utilisée pour chiffrer des informations échangées sur le canal principal et une seconde clé secrète, *AuthN* utilisée pour authentifier l'ensemble des noeuds appartenant au réseau. Le cas échéant un vecteur d'initialisation ou nonce *IV* sera également transmis comme paramètre de l'algorithme de chiffrement (AES par exemple).

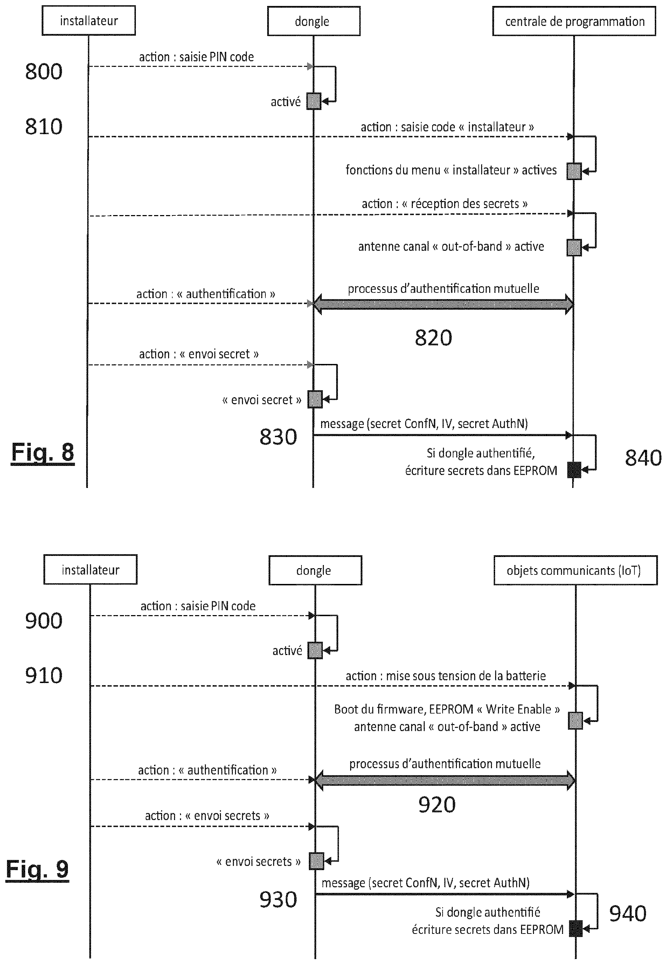

La Fig. 8 représente de manière schématique une phase de transmission de clés secrètes par le dongle sécurisé à la centrale de programmation, dans le cadre d'un premier mode de réalisation de l'invention.

On rappelle que dans ce mode de réalisation, la transmission se fait au moyen d'un canal auxiliaire basé sur une couche physique distincte de celle du canal principal. La confidentialité de la transmission entre le dongle et les noeuds du réseau est garantie par la faible portée de la propagation sur le canal auxiliaire.

Dans une étape préalable, 800, l'installateur accède aux commandes du dongle en introduisant son mot de passe ou code PIN.

A l'étape 810, après avoir entré son code installateur, il configure la centrale de programmation dans un mode « installation », par exemple en sélectionnant ce mode dans un menu déroulant puis active la fonction « réception des clés secrètes » dans le sous-menu installation. L'activation de cette fonction commute l'émetteur/ récepteur de la centrale de programmation en mode réception sur l'antenne du canal auxiliaire pendant un intervalle de temps de durée prédéterminée (par exemple quelques minutes).

En 820, on a représenté à titre de rappel la phase d'authentification et d'indentification mutuelle, ici entre le dongle et la centrale de programmation.

L'installateur déclenche à l'étape 830 la transmission de l'ensemble des clés secrètes par le dongle, par exemple en appuyant simultanément sur les boutons 317 représentés en Fig. 3. Les clés secrètes sont reçues par la centrale de programmation et stockées dans son EEPROM en 840 si le dongle a été identifié avec succès dans la phase d'authentification, 820.

La Fig. 9 représente de manière schématique une phase de transmission de clés secrètes par le dongle sécurisé à un objet connecté, dans le cadre du premier mode de réalisation de l'invention.

Cette phase de transmission est lancée lors de l'initialisation de l'objet connecté, notamment lors de sa première mise sous tension (mise en contact de la pile). La mémoire EEPROM de l'objet connecté est alors automatiquement en mode autorisation d'écriture (write enable) et le code embarqué (firmware) démarre son exécution. L'antenne de l'objet est automatiquement commutée sur le canal auxiliaire utilisant une propagation de faible portée.

Dans une étape préalable, 900, l'installateur accède aux commandes du dongle en saisissant un mot de passe ou un code confidentiel (PIN code).

En 910, il initialise ensuite l'objet connecté par exemple en le mettant sous tension et place le dongle à proximité de l'objet en question.

On a rappelé en 920 la phase d'authentification et d'identification mutuelle entre le dongle et l'objet connecté.

A l'étape 930, l'installateur déclenche la transmission de l'ensemble des clés secrètes par le dongle, par exemple en appuyant simultanément sur les boutons 317 du dongle représenté en Fig. 3. Les clés secrètes sont reçues par l'objet connecté et stockées dans son EEPROM en 940 si le dongle a été identifié avec succès dans la phase d'authentification 920. Lorsque les clés secrètes ont été sauvegardées en mémoire, l'objet connecté le signale au moyen d'un signal sonore/lumineux (par exemple LED verte).

Une fois les clés sauvegardées, l'antenne de l'objet connecté est automatiquement commutée sur le canal principal.

Le processus de transmission de clés secrètes est répété pour chacun des objets connectés destinés à faire partie du réseau. Les objets connectés ainsi provisionnés sont ensuite déployés sur site.

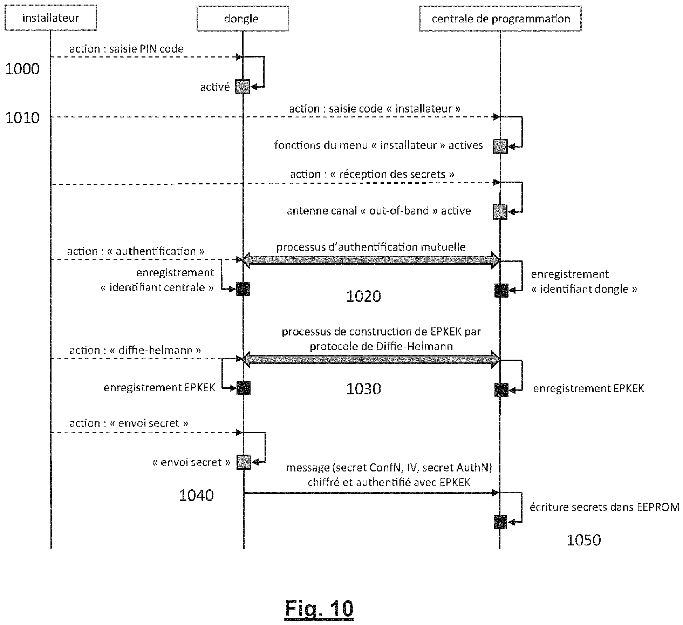

La Fig. 10 représente de manière schématique une étape de transmission de clés secrètes par le dongle sécurisé à la centrale de programmation, dans le cadre d'un second mode de réalisation de l'invention.

Dans ce second mode de réalisation, la transmission des secrets est sécurisée au moyen d'une clé de session éphémère, *EPKEK* (Ephemeral Partial Key Encryption Key), clé symétrique obtenue par un échange de Diffie-Hellmann entre le dongle et la centrale de programmation. Il convient de noter que cette construction de clé de session éphémère ne fait pas intervenir les objets connectés. Ainsi, seuls le dongle et la centrale de programmation doivent embarquer des primitives de cryptographie asymétrique.

Les étapes 1000, 1010, 1020 sont respectivement identiques aux étapes 800, 810, 820 décrites en relation avec la Fig. 8 pour le premier mode de réalisation.

A l'étape 1030, le dongle et la centrale de programmation utilisent un protocole d'échange de clés de Diffie-Hellmann pour construire une clé de session symétrique, *EPKEK*.

A l'étape 1040, l'installateur déclenche la transmission en mode sécurisé de l'ensemble des clés secrètes par le dongle, par exemple en appuyant simultanément sur les boutons 317 du dongle représenté en Fig. 3. Les clés secrètes sont chiffrées au moyen de la clé de session symétrique, *EPKEK,* avant d'être transmises à la centrale de programmation.

A l'étape 1050, les clés secrètes ainsi chiffrées sont reçues par la centrale de programmation, déchiffrées au moyen de la clé *EPKEK*, puis stockées dans son EEPROM.

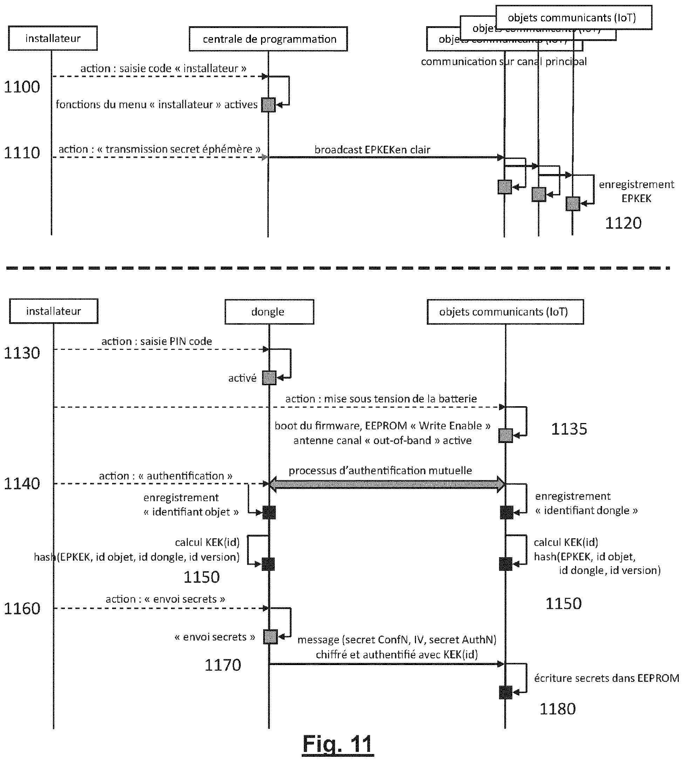

La Fig. 11 représente de manière schématique une phase de distribution par le dongle de clés secrètes aux noeuds connectés, dans le cadre du second mode de réalisation de l'invention.

Dans un premier temps, représenté dans la partie supérieure de la figure, la centrale de programmation diffuse la clé de session à l'ensemble des objets connectés. Plus précisément, après avoir saisi son code confidentiel en 1100 sur la centrale de programmation, l'installateur ordonne en 1110 de diffuser la clé de session à l'ensemble des objets connectés. Cette diffusion étant réalisée en clair sur le canal principal, la clé de session n'est pas secrète. Elle est enregistrée dans la mémoire EEPROM de chaque objet connecté en 1120.

Dans un second temps, représenté dans la partie inférieure de la figure, après que l'installateur a introduit son code confidentiel dans le dongle en 1130 et mis sous tension la batterie de chaque objet connecté en 1135, il déclenche en 1140 une phase d'authentification et d'identification mutuelle entre le dongle et les objets connectés, comme décrit en relation avec le premier mode de réalisation. Au terme de cette phase, le dongle a enregistré dans sa mémoire EEPROM les identifiants des objets connectés et, réciproquement, chaque objet connecté a enregistré dans sa mémoire EEPROM l'identifiant du dongle. En outre, lorsque le dongle a authentifié avec succès les objets connectés du réseau, celui-ci connaît la version du certificat numérique embarqué dans ces objets.

A la différence du premier mode de réalisation, chaque couple formé par le dongle et un noeud du réseau (centrale de programmation ou objet connecté) calcule ensuite, en 1150, une clé symétrique de liaison, $KEK(Ido,Idd)$ où $Ido$ est l'identifiant de l'objet connecté et $Idd$ est l'identifiant du dongle. Plus précisément, le dongle et le noeud calculent chacun de leur côté la clé de liaison :

$$ KEK\left(Ido, Idd\right) = Hash\left(EPKEK \parallel Ido \parallel Idd \parallel Idv\right) $$

où $Idv$ est l'identifiant de la version du certificat numérique de la clé publique du fabricant, associée à la clé privée ayant servi à signer le code embarqué dans l'objet connecté. On notera que les identifiants $Ido$ , $Idd$ et $Idv$ sont connus tant du dongle que de l'objet connecté, au terme de la phase d'authentification et d'identification mutuelle. Le cas échéant, la clé de liaison pourra être tronquée à un nombre prédéterminé de bits (par exemple les 128 premiers bits) du résultat du hachage.

Sur requête de l'installateur en 1160 (matérialisée par une pression sur les deux boutons 317), le dongle transmet en 1170, sur le canal auxiliaire, l'ensemble des clés secrètes sous la forme d'un message chiffré par la clé de liaison $KEK(Ido,Idd)$. Cette opération est bien entendu répétée pour chaque objet connecté du réseau. Après réception du message et déchiffrement, les clés secrètes sont alors enregistrées dans la mémoire EEPROM de l'objet connecté en 1180.

Une fois les clés secrètes diffusées à la centrale de programmation et aux objets connectés, la centrale de programmation lance une phase de découverte du réseau en mode sécurisé. Cette phase est identique que l'on soit dans le premier ou le second mode de réalisation.

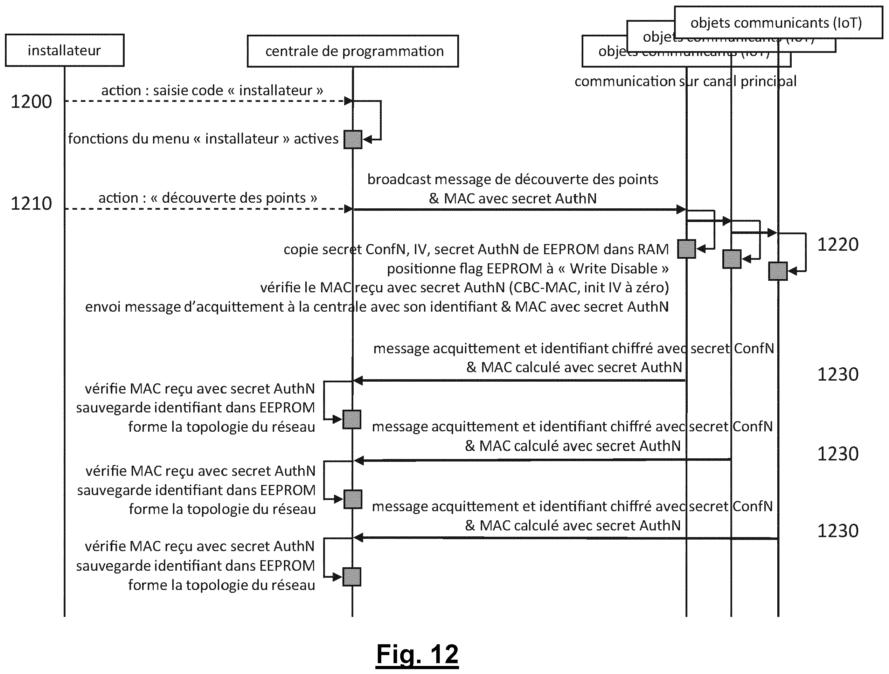

La Fig. 12 représente de manière schématique une phase de découverte du réseau d'objets connectés par la centrale de programmation.

Après avoir entré son code confidentiel en 1200 sur la centrale de programmation, l'installateur ordonne à celle-ci en 1210 de découvrir les noeuds du réseau. La centrale de programmation diffuse alors, sur le canal principal, un message de découverte des noeuds du réseau en mode sécurisé. Ce message de découverte est authentifié en générant un code d'authentification de ce massage ou MAC (Message Authentication Code), par exemple au moyen de l'algorithme CBC-MAC ou de l'algorithme HMAC, à partir de la clé secrète $AuthN$ . Le message de découverte et son code MAC sont diffusés à l'ensemble des noeuds connectés.

Lorsqu'un objet connecté reçoit ledit message de découverte avec son code d'authentification $AuthN,$ celui-ci le propage aux noeuds voisins, en 1220. Il lit ensuite dans sa mémoire EEPROM les clés secrètes $AuthN$ et $ConfN$ et vérifie le code d'authentification du message de découverte à l'aide de la clé secrète, $AuthN$ .

Si le code d'authentification est vérifié avec succès (autrement dit si le message de découverte a bien été généré par la centrale de programmation du réseau), l'objet connecté renvoie à la centrale de programmation un message d'acquittement incluant son identifiant, $Ido$, en 1230. Ce message d'acquittement est authentifié en générant un code d'authentification MAC à l'aide de la clé secrète, $AuthN,$ puis chiffré à l'aide de la clé secrète $ConfN$.

A la réception d'un message d'acquittement, la centrale de programmation déchiffre celui-ci avec la clé secrète $ConfN,$ puis vérifie avec la clé secrète $AuthN$ qu'il provient bien d'un noeud du réseau. Lorsque le message d'acquittement a bien été authentifié par la centrale de programmation, celle-ci sauvegarde l'identifiant de l'objet connecté ayant répondu, $Ido$. Autrement dit, seuls les objets connectés, préalablement configurés à l'aide du dongle, peuvent être incorporés dans le réseau. La centrale de programmation enregistre enfin la topologie de son réseau.

La présente méthode de provisionnement de clés dans un réseau d'objets connectés permet d'ajouter un nouvel objet (capteur ou actionneur par exemple) après que le réseau a été initialement déployé. Pour ce faire, l'installateur doit disposer du dongle ayant servi lors du déploiement initial. Par exemple dans le cadre du premier mode de réalisation, on peut procéder comme expliqué en relation avec la Fig. 9. Autrement dit, après introduction du code PIN dans le dongle et mise sous tension de l'objet connecté à ajouter, une phase d'authentification et d'identification mutuelle est lancée. Les clés secrètes stockées dans le dongle sont transmises à l'objet connecté via le canal auxiliaire. Après enregistrement des clés secrètes dans la mémoire EEPROM de l'objet, celui-ci commute son émetteur/récepteur sur le canal principal en maintenant la mémoire EEPROM en mode écriture (Write Enable).

## Revendications

1. Méthode de provisionnement de clés dans un réseau sans fil dont les noeuds comprennent une centrale de programmation et une pluralité d'objets connectés, **caractérisée en ce qu'**elle met en oeuvre un terminal comportant un élément matériel sécurisé dans lequel sont stockées des clés secrètes, les différents noeuds du réseau pouvant communiquer sur un canal principal et sur un canal auxiliaire, distinct du canal principal, ledit terminal ne pouvant communiquer avec les différents noeuds du réseau que sur le canal auxiliaire, ladite méthode comprenant :

- une première phase pendant laquelle le terminal et chaque noeud du réseau s'authentifient et s'identifient mutuellement via le canal auxiliaire au moyen d'une clé publique du fabricant ;
- une seconde phase pendant laquelle le terminal distribue de manière sécurisée un ensemble de clés secrètes aux différents noeuds du réseau, ledit ensemble de clés secrètes comprenant une première clé secrète (*AuthN* ), destinée à authentifier les noeuds appartenant au réseau et une seconde clé secrète (*ConfN*) destinée à chiffrer des échanges sur le canal principal ;
- une troisième phase pendant laquelle la centrale de programmation découvre le réseau au moyen d'un message de découverte diffusé aux objets connectés, le message de découverte étant authentifié au moyen de la première clé secrète et, en cas de succès d'authentification dudit message par un objet connecté, envoi d'un message d'acquittement à la centrale de programmation, chiffré par la seconde clé secrète.

**2.** Méthode de provisionnement de clés dans un réseau sans fil selon la revendication 1, **caractérisée en ce que** chaque noeud est équipé d'une première antenne adaptée à émettre et recevoir sur le canal principal et d'une seconde antenne adaptée à émettre et recevoir sur le canal auxiliaire, la propagation sur le canal auxiliaire étant de portée sensiblement plus courte que la propagation sur le canal principal.

**3.** Méthode de provisionnement de clés dans un réseau sans fil selon la revendication 2, **caractérisée en ce que** le terminal, resp. chaque noeud du réseau, dispose d'un identifiant unique du fabricant et embarque un code binaire, ledit code binaire étant haché au moyen d'une fonction de hachage, le résultat du hachage étant concaténé avec ledit identifiant unique, l'ensemble étant signé par une clé privée correspondant à la clé publique du fabricant et le résultat signé étant stocké dans le terminal, resp. noeud sous forme d'identifiant signé, et que, dans la première phase, le terminal transmet son identifiant signé à chaque noeud du réseau, le noeud authentifiant le terminal à partir l'identifiant signé du terminal et de ladite clé publique du fabricant et que, réciproquement, chaque noeud transmet son identifiant signé au terminal, le terminal authentifiant chaque noeud à partir de l'identifiant signé du noeud et de ladite clé publique du fabricant.

**4.** Méthode de provisionnement de clés dans un réseau sans fil selon la revendication 3, **caractérisée en ce qu'**en cas de succès d'authentification du terminal par un noeud, l'identifiant du terminal est stocké dans une mémoire EEPROM de ce noeud.

**5.** Méthode de provisionnement de clés dans un réseau sans fil selon la revendication 4, **caractérisée en ce que** dans la seconde phase, le terminal transmet, via le canal auxiliaire, ledit ensemble de clés secrètes à chaque noeud et que, dans le cas où l'identifiant du terminal est stocké dans le noeud, ce dernier stocke ledit ensemble de clés secrètes dans la mémoire EEPROM du noeud et commute son émetteur/récepteur sur le canal principal.

**6.** Méthode de provisionnement de clés dans un réseau sans fil selon la revendication 1, **caractérisée en ce que** le canal auxiliaire entre le terminal et chaque noeud est chiffré au moyen d'une clé symétrique de liaison obtenue à partir d'une clé de session éphémère, de l'identifiant du terminal ainsi que de l'identifiant dudit noeud.

**7.** Méthode de provisionnement de clés dans un réseau sans fil selon la revendication 6, **caractérisée en ce que** la clé de session éphémère est obtenue au moyen d'un échange de Diffie-Hellman entre le terminal et la centrale de programmation.

**8.** Méthode de provisionnement de clés dans un réseau sans fil selon la revendication 7, **caractérisée en ce que** dans la seconde phase le terminal transmet, dans une première étape, ledit ensemble de clés secrètes à la centrale de programmation, ledit ensemble de clés secrètes étant chiffré au moyen de la clé de session éphémère.

**9.** Méthode de provisionnement de clés dans un réseau sans fil selon la revendication 8, **caractérisée en ce que** dans la seconde phase, le terminal transmet, dans une seconde étape, ledit ensemble de clés secrètes à chaque noeud, ledit ensemble de clés secrètes étant chiffré au moyen de la clé symétrique de liaison associée au terminal et à ce noeud, ladite clé symétrique de liaison étant obtenue comme un haché de la clé éphémère concaténée à l'identifiant unique du terminal et à l'identifiant unique du noeud.

**10.** Méthode de provisionnement de clés dans un réseau sans fil selon l'une des revendication précédentes, **caractérisé en ce que**, dans la troisième phase, lorsqu'un noeud authentifie avec succès un message de découverte émis par la centrale de programmation, il lui renvoie un message d'acquittement signé par la seconde clé secrète, la centrale de programmation stockant alors l'identifiant dudit objet dans sa mémoire locale après l'avoir déchiffré avec la seconde clé secrète.

**Patentansprüche**

1. Verfahren zur Bereitstellung von Schlüsseln in einem Drahtlosnetzwerk, dessen Knoten eine Programmierzentrale und eine Vielzahl von verbundenen Objekten umfassen, **dadurch gekennzeichnet, dass** es ein Endgerät zum Einsatz bringt, das ein gesichertes Hardwareelement umfasst, in dem geheime Schlüssel gespeichert sind, wobei die verschiedenen Knoten des Netzwerks auf einem Hauptkanal und auf einem vom Hauptkanal getrennten Nebenkanal kommunizieren können, wobei das Endgerät nur auf dem Nebenkanal mit den verschiedenen Knoten des Netzwerks kommunizieren kann, wobei das Verfahren umfasst:

   - eine erste Phase, während der das Endgerät und jeder Knoten des Netzwerks sich über den Nebenkanal mittels eines öffentlichen Schlüssels des Herstellers gegenseitig authentifizieren und identifizieren;
   - eine zweite Phase, während der das Endgerät einen Satz geheimer Schlüssel gesichert an die verschiedenen Knoten des Netzwerks verteilt, wobei der Satz geheimer Schlüssel einen ersten geheimen Schlüssel (*AuthN*), der dazu bestimmt ist, die zum Netzwerk gehörenden Knoten zu authentifizieren, und einen zweiten geheimen Schlüssel (*ConfN*) umfasst, der dazu bestimmt ist, Austausche auf dem Hauptkanal zu verschlüsseln;
   - eine dritte Phase, während der die Programmierzentrale das Netzwerk mittels einer Erkennungsnachricht, die an die verbundenen Objekte verbreitet wird, erkennt, wobei die Erkennungsnachricht mittels des ersten geheimen Schlüssels authentifiziert wird und, im Fall einer erfolgreichen Authentifizierung der Nachricht durch ein verbundenes Objekt, Senden einer Bestätigungsnachricht, die mit dem zweiten geheimen Schlüssel verschlüsselt ist, an die Programmierzentrale.

2. Verfahren zur Bereitstellung von Schlüsseln in einem Drahtlosnetzwerk nach Anspruch 1, **dadurch gekennzeichnet, dass** jeder Knoten mit einer ersten Antenne, die geeignet ist, um auf dem Hauptkanal zu senden und zu empfangen, und einer zweiten Antenne, die geeignet ist, um auf dem Nebenkanal zu senden und zu empfangen, ausgestattet ist, wobei die Ausbreitung auf dem Nebenkanal eine wesentlich kürzere Reichweite aufweist als die Ausbreitung auf dem Hauptkanal.

3. Verfahren zur Bereitstellung von Schlüsseln in einem Drahtlosnetzwerk nach Anspruch 2, **dadurch gekennzeichnet, dass** das Endgerät bzw. jeder Knoten des Netzwerks über eine eindeutige Kennung des Herstellers verfügt und einen Binärcode besitzt, wobei der Binärcode mittels einer Hashfunktion gehasht wird, das Ergebnis des Hashens mit der eindeutigen Kennung verkettet wird, das Ganze mit einem privaten Schlüssel, der dem öffentlichen Schlüssel des Herstellers entspricht, signiert wird, und das signierte Ergebnis im Endgerät bzw. Knoten in Form einer signierten Kennung gespeichert wird, und dass in der ersten Phase das Endgerät seine signierte Kennung an jeden Knoten des Netzwerks überträgt, wobei der Knoten das Endgerät anhand der signierten Kennung des Endgeräts und des öffentlichen Schlüssels des Herstellers authentifiziert, und dass im Gegenzug jeder Knoten seine signierte Kennung an das Endgerät überträgt, wobei das Endgerät jeden Knoten anhand der signierten Kennung des Knotens und des öffentlichen Schlüssels des Herstellers authentifiziert.

4. Verfahren zur Bereitstellung von Schlüsseln in einem Drahtlosnetzwerk nach Anspruch 3, **dadurch gekennzeichnet, dass** im Fall einer erfolgreichen Authentifizierung des Endgeräts durch einen Knoten die Kennung des Endgeräts in einem EEPROM-Speicher dieses Knotens gespeichert wird.

5. Verfahren zur Bereitstellung von Schlüsseln in einem Drahtlosnetzwerk nach Anspruch 4, **dadurch gekennzeichnet, dass** in der zweiten Phase das Endgerät über den Nebenkanal den Satz geheimer Schlüssel an jeden Knoten überträgt und dass in dem Fall, in dem die Kennung des Endgeräts im Knoten gespeichert ist, letzterer den Satz geheimer Schlüssel im EEPROM-Speicher des Knotens speichert und seinen Sender/Empfänger auf den Hauptkanal umschaltet.

6. Verfahren zur Bereitstellung von Schlüsseln in einem Drahtlosnetzwerk nach Anspruch 1, **dadurch gekennzeichnet, dass** der Nebenkanal zwischen dem Endgerät und jedem Knoten mittels eines symmetrischen Verbindungsschlüssels verschlüsselt wird, der anhand eines flüchtigen Sitzungsschlüssels, der Kennung des Endgeräts sowie der Kennung des Knotens erhalten wird.

7. Verfahren zur Bereitstellung von Schlüsseln in einem Drahtlosnetzwerk nach Anspruch 6, **dadurch gekennzeichnet, dass** der flüchtige Sitzungsschlüssel mittels eines Diffie-Hellman-Austauschs zwischen dem Endgerät und der Programmierzentrale erhalten wird.

8. Verfahren zur Bereitstellung von Schlüsseln in einem Drahtlosnetzwerk nach Anspruch 7, **dadurch gekennzeichnet,**

**dass** in der zweiten Phase das Endgerät in einem ersten Schritt den Satz geheimer Schlüssel an die Programmierzentrale überträgt, wobei der Satz geheimer Schlüssel mittels des flüchtigen Sitzungsschlüssels verschlüsselt wird.

9. Verfahren zur Bereitstellung von Schlüsseln in einem Drahtlosnetzwerk nach Anspruch 8, **dadurch gekennzeichnet, dass** in der zweiten Phase das Endgerät in einem zweiten Schritt den Satz geheimer Schlüssel an jeden Knoten überträgt, wobei der Satz geheimer Schlüssel mittels des symmetrischen Verbindungsschlüssels, der dem Endgerät und diesem Knoten zugeordnet ist, verschlüsselt wird, wobei der symmetrische Verbindungsschlüssel als Hash des flüchtigen Schlüssels, der mit der eindeutigen Kennung des Endgeräts und der eindeutigen Kennung des Knotens verkettet ist, erhalten wird.

10. Verfahren zur Bereitstellung von Schlüsseln in einem Drahtlosnetzwerk nach einem der vorstehenden Ansprüche, **dadurch gekennzeichnet, dass** in der dritten Phase, wenn ein Knoten eine von der Programmierzentrale gesendete Erkennungsnachricht erfolgreich authentifiziert, er ihr eine mit dem zweiten geheimen Schlüssel signierte Bestätigungsnachricht zurücksendet, wobei die Programmierzentrale die Kennung des Objekts dann, nachdem sie diese mit dem zweiten geheimen Schlüssel entschlüsselt hat, in ihrem lokalen Speicher speichert.

## Claims

1. A method for provisioning keys in a wireless network whose nodes comprise a programming station and a plurality of connected objects, **characterised in that** it implements a terminal including a secure hardware element in which secret keys are stored, the different nodes of the network being able to communicate over a main channel and over an auxiliary channel, distinct from the main channel, said terminal being able to communicate with the different nodes of the network only over the auxiliary channel, said method comprising:

   - a first phase during which the terminal and each node of the network authenticate and mutually identify themselves via the auxiliary channel by means of a public key of the manufacturer;
   - a second phase during which the terminal securely distributes a set of secret keys to the different nodes of the network, said set of secret keys comprising a first secret key (*AuthN*), intended to authenticate the nodes belonging to the network and a second secret key (*ConfN*) intended to encrypt exchanges over the main channel;
   - a third phase during which the programming station discovers the network by means of a discovery message broadcast to the connected objects, the discovery message being authenticated by means of the first secret key and, in case of successful authentication of said message by a connected object, sending of an acknowledgment message to the programming station, encrypted by the second secret key.

2. The method for provisioning keys in a wireless network according to claim 1, **characterised in that** each node is equipped with a first antenna adapted to emit and receive over the principal channel and with a second antenna adapted to emit and receive over the auxiliary channel, the propagation over the auxiliary channel having a range substantially shorter than the propagation over the main channel.

3. The method for provisioning keys in a wireless network according to claim 2, **characterised in that** the terminal, resp. each node of the network, is provided with a unique identifier of the manufacturer and embeds a binary code, said binary code being hashed by means of a hash function, the result of hashing being concatenated with said unique identifier, the whole being signed by a private key corresponding to the public key of the manufacturer and the signed result being stored in the terminal, resp. node in the form of a signed identifier, and that, in the first phase, the terminal transmits its signed identifier to each node of the network, the node authenticating the terminal from the signed identifier of the terminal and from said public key of the manufacturer and that, conversely, each node transmits its signed identifier to the terminal, the terminal authenticating each node from the signed identifier of the node and from said public key of the manufacturer.

4. The method for provisioning keys in a wireless network according to claim 3, **characterised in that** in case of success of authentication of the terminal by a node, the identifier of the terminal is stored in an EEPROM memory of this node.

5. The method for provisioning keys in a wireless network according to claim 4, **characterised in that**, in the second phase, the terminal transmits, via the auxiliary channel, said set of secret keys to each node and that, in the case where the identifier of the terminal is stored in the node, the latter stores said set of secret keys in the EEPROM memory of the node and switches its emitter/receiver to the main channel.

6. The method for provisioning keys in a wireless network according to claim 1, **characterised in that** the auxiliary channel between the station and each node is encrypted by means of a symmetrical link key obtained from an ephemeral session key, of the identifier of the terminal as well as the identifier of said node.

7. The method for provisioning keys in a wireless network according to claim 6, **characterised in that** the ephemeral session key is obtained by means of a Diffie-Hellman exchange between the terminal and the programming station.

8. The method for provisioning keys in a wireless network according to claim 7, **characterised in that** in the second phase, the terminal transmits, in a first step, said set of secret keys to the programming station, said set of secret keys being encrypted by means of the ephemeral session key.

9. The method for provisioning keys in a wireless network according to claim 8, **characterised in that**, in the second phase, the terminal transmits, in a second step, said set of secret keys to each node, said set of secret keys being encrypted by means of the symmetrical link key associated to the terminal and to this node, said symmetrical link key being obtained as a hash of the ephemeral key concatenated with the unique identifier of the terminal and with the unique identifier of the node.

10. The method for provisioning keys in a wireless network according to one of the preceding claims, **characterised in that**, in the third phase, when a node successfully authenticates a discovery message emitted by the programming station, it sends to it an acknowledgement message signed by the second secret key, the programming station then storing the identifier of said object in its local memory after having decrypted it with the second secret key.

Dispositif comportant
un composant matériel sécurisé

Dispositif du réseau de capteur
comportant une interface utilisateur

100

101

Provisionnement des secrets sur canal sécurisé
par Diffie-Hellmann

Dongle
Smartphone
...

canal out-of-band

Provisionnement des secrets sur canal sécurisé (individuellement)
par procédé cryptographique

canal principal

102(a)

102(c)

102(b)

Objets du réseau de capteurs

**Fig. 1**

EP 4 096 159 B1

241 242 230

250 → 220

210

## Fig. 2

310 320

319 — couches protocolaire canal « out-of-band »

318 — écran

317 — boutons

313 — Mémoire FLASH

311 — Mémoire RAM

315

**General Purpose CPU**
micro-contrôlleur

Interface de communication (par events)

**Secure Element**

Secure CPU

RAM

FLASH — 327

EEPROM — 321

AHB to APB bridge

timer

AES crpto-accelerator

ECC library

TRNG

325 323 329

## Fig. 3

**Fig. 4**

centrale de programmation

**Fig. 5**

couches protocolaire canal principal

625

couches protocolaire canal « out-of-band »

624

Mémoire FLASH

621

Mémoire RAM

622

Mémoire EEPROM (recommandée)

623

General Purpose CPU micro-contrôlleur 16 ou 32 bits

610

**Fig. 6**

**Fig. 7**

EP 4 096 159 B1

**Fig. 8**

**Fig. 9**

18

| installateur | dongle | centrale de programmation |

action : saisie PIN code

**1000**

activé

action : saisie code « installateur »

**1010**

fonctions du menu « installateur » actives

action : « réception des secrets »

antenne canal « out-of-band » active

action : « authentification »

processus d'authentification mutuelle

enregistrement
« identifiant centrale »

**1020**

enregistrement
« identifiant dongle »

processus de construction de EPKEK par
protocole de Diffie-Helmann

action : « diffie-helmann »

enregistrement EPKEK

**1030**

enregistrement EPKEK

action : « envoi secret »

« envoi secret »

message (secret ConfN, IV, secret AuthN)
chiffré et authentifié avec EPKEK

**1040**

écriture secrets dans EEPROM

**1050**

**Fig. 10**

19

installateur | centrale de programmation | objets communicants (IoT)

objets communicants (IoT)

objets communicants (IoT)

communication sur canal principal

1100

action : saisie code « installateur »

fonctions du menu « installateur » actives

1110

action : « transmission secret éphémère »

broadcast EPKEKen clair

enregistrement
EPKEK

1120

installateur | dongle | objets communicants (IoT)

1130

action : saisie PIN code

activé

action : mise sous tension de la batterie

boot du firmware, EEPROM « Write Enable »
antenne canal « out-of-band » active

1135

1140

action : « authentification »

processus d'authentification mutuelle

enregistrement
« identifiant objet »

enregistrement
« identifiant dongle »

calcul KEK(id)
hash(EPKEK, id objet, id dongle, id version)

1150

calcul KEK(id)
hash(EPKEK, id objet,
id dongle, id version)

1160

action : « envoi secrets »

1150

« envoi secrets »

message (secret ConfN, IV, secret AuthN)
chiffré et authentifié avec KEK(id)

1170

écriture secrets dans EEPROM

1180

## Fig. 11

20

**installateur** | **centrale de programmation** | **objets communicants (IoT)**

communication sur canal principal

1200 — action : saisie code « installateur »

fonctions du menu « installateur » actives

broadcast message de découverte des points
& MAC avec secret AuthN

1210 — action : « découverte des points »

copie secret ConfN, IV, secret AuthN de EEPROM dans RAM
positionne flag EEPROM à « Write Disable »
vérifie le MAC reçu avec secret AuthN (CBC-MAC, init IV à zéro)
envoi message d'acquittement à la centrale avec son identifiant & MAC avec secret AuthN

1220

message acquittement et identifiant chiffré avec secret ConfN
& MAC calculé avec secret AuthN

1230

vérifie MAC reçu avec secret AuthN
sauvegarde identifiant dans EEPROM
forme la topologie du réseau

message acquittement et identifiant chiffré avec secret ConfN
& MAC calculé avec secret AuthN

1230

vérifie MAC reçu avec secret AuthN
sauvegarde identifiant dans EEPROM
forme la topologie du réseau

message acquittement et identifiant chiffré avec secret ConfN
& MAC calculé avec secret AuthN

1230

vérifie MAC reçu avec secret AuthN
sauvegarde identifiant dans EEPROM
forme la topologie du réseau

**Fig. 12**

EP 4 096 159 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017310485 A1

**Littérature non-brevet citée dans la description**

- **GENGYUN WANG et al.** *Comparison and Evaluation of Industrial Wireless Sensor Network Standards,* 1-97